# EUROPEAN PATENT SPECIFICATION

(11) **EP 1 933 995 B1**
(45) Date of publication and mention of the grant of the patent: **25.01.2012**
(21) Application number: 05783795.7
(22) Date of filing: 08.09.2005
(51) Int. Cl.: B21C 3/00, B21C 3/02, B21C 3/16, B21C 3/18, B21C 25/04, B21K 5/20, B23P 15/24, H05K 3/00, C22C 45/02, B29C 45/02, B29C 33/42

(54) **FORMING TOOL**
FORMWERKZEUG
OUTIL DE FORME

(43) Date of publication of application: 25.06.2008
(73) Proprietor: Constellium Switzerland AG, 8048 Zürich (CH)
(72) Inventor: DENEUVILLE, Patrick, F-38430 Moirans (FR)
(74) Representative: Fénot, Dominique
(86) International application number: PCT/EP2005/009629
(87) International publication number: WO 2007/028410

(56) References cited:
- WO-A-03/061356
- WO-A-2006/032369
- US-A1- 2003 135 998
- US-A1- 2004 211 222
- DATABASE WPI Section Ch, Week 200608 Derwent Publications Ltd., London, GB; Class A32, AN 2006-072551 XP002379394 -& JP 2006 002238 A (YOSHIDA KOGYO KK) 5 January 2006 (2006-01-05)
- PATENT ABSTRACTS OF JAPAN vol. 1999, no. 01, 29 January 1999 (1999-01-29) -& JP 10 265917 A (INOUE AKIHISA), 6 October 1998 (1998-10-06)
- PATENT ABSTRACTS OF JAPAN vol. 1998, no. 13, 30 November 1998 (1998-11-30) -& JP 10 217257 A (OLYMPUS OPTICAL CO LTD; INOUE AKIHISA), 18 August 1998 (1998-08-18)

## Description

The present invention relates to a forming tool.

In the materials processing industries there are many types of forming operation. In the metals industry forming operations can include, for example:
- an extrusion process which is defined as the process of shaping material, such as aluminium, by forcing it to flow through a shaped opening in a die. Extruded material emerges as an elongated piece with the same profile as the die opening.
- a wire drawing process, which is a metal-reducing process in which a wire rod is pulled or drawn through a single die or a series of continuous dies, thereby reducing its diameter. Because the volume of the wire remains the same, the length of the wire changes according to its new diameter.

A work-piece is an unformed or pre-formed body of determinate or indeterminate size and shape. For example a solid block of metal or plastic is a work-piece. In an extrusion process the work-piece is e.g. a billet. In a wire drawing processes the work-piece is e.g. a rod.

A ductile compound is an unformed material in a solid to semi-solid state.

In this invention a structured surface is meant to be where the surface is not intended to be smooth. Of course most surfaces are not perfectly smooth, but it will be readily understood what is covered by the meaning of a structured surface if it is defined as one possessing deliberate roughness, patterns, protuberances, depressions, ridges and troughs or engraving-like features, such features to be transmitted to the surface of the work-piece such that the work-piece surface is also not smooth.

In most of the forming operations there is eventually a need to replace the tools used for forming, or to refurbish the same.

The life of a forming tool is often extended by adding a protective layer to that surface of the forming tool that comes into contact with the work-piece. In forming operations using dies and punches, such protective coatings are usually deposited onto the working surface of the tool without any subsequent profiling step, i.e. they are applied in such a way that the shape required is still derived from the shape defined by the main body and profile of the forming tool itself.

Forming tools are generally used for single purposes, that is, with one kind of shape in mind. They do not provide flexibility in the sense of it being easy and straightforward to change the surface of the forming tool.

WO 03/061356 A1 discloses a forming tool comprising a tool body and at least a metallic glass layer on at least the working surface of the forming tool whereas the forming tool Is an embossing die of a polymer processing unit for manufacturing high density interconnects.

From US 2003/135998 A1 it is known to use embossing rolls as an alternative to mutually pressing dies.

It is an object of this invention to provide a new forming tool that can have its surface easily modified.

It is a further object of the invention that the surface of the forming tool can be easily and inexpensively produced and eventually refurbished.

The problem is solved by the features of Independent claim 1.

In a first embodiment the mentioned tool of the extrusion press contains at least a body, which is the substrate, and at least a metallic glass layer according to the invention, which is directly or indirectly applied on the tool body. The metallic glass layer is applied at least at the working surface. The extrusion tool having a metallic glass layer can be a tool, which is directly involved in the forming process of the work-piece, such as an extrusion die, a die assembly (tool stack) or a mandrel. A die assembly can comprise a die, a bolster, a backer, a feeder, a die mandrel or a die cap. Moreover, the mentioned extrusion tool having a metallic glass layer can also be a tool, which is indirectly involved in the forming process of the work-piece, such as a container (wall), a press plunger, a press ram or a dummy block. The substrate of these tools can be of one of a hard cast-iron or hard steel.

In second embodiment the above mentioned extrusion tools can also be completely made of a metallic glass. Hence the metallic glass is used as bulk material.

The working surface of the tool, which is made of metallic glass, is wear resistant and therefore durable. Moreover the metallic glass surface makes it easier to rework the tool by heating the worn surfaces and rebuilding the metallic glass surface.

The extrusion press according to the invention can be used to produces profile sections made of metal, in particular made of aluminium or an aluminium alloy. It is also possible to use the extrusion press having extrusion tools according to the invention to produce profiles made of plastics.

The tools of a wire drawing machine containing a metallic glass layer according to the invention can be as already mentioned dies or drawing plates. The metallic glass layer is applied on the tool at least at its working surface. The substrate of these tools can be of one of a hard cast-iron, hard steel, diamond or ruby. It is also possible that the complete forming tool (die) is made of a metallic glass. Hence the metallic glass is used as bulk material.

The machine can be a continuous wire-drawing machine or a single-block machine. The continuous wire-drawing machine comprises a series of dies, whereby the work-piece, i.e. metallic rod, is reduced to the desired diameter and properties by repeated drawing through progressively smaller dies.

The working surface of the dies, which is made of metallic glass, is wear resistant and therefore durable. Moreover the metallic glass surface makes it easier to rework the tool by heating the worn surfaces and rebuilding the metallic glass surface.

The wire drawing unit according to the invention can be used to produce wires made of metal, e.g. aluminium, aluminium alloy, copper, copper alloy, iron, or steel.

In a forming process more than one forming tools can be coated with or be made of metallic glass. The tools of such a processing unit can be coated with or made of the same or different metallic glass materials.

It will be readily appreciated that the metallic glass layer need not be directly adjacent to the working surface of the forming tool and that other Intermediate and functional layers can be incorporated, for example a compliant layer to accommodate differences in thermal expansion coefficients.

Metallic glasses are multi-component metallic alloys that, when cooled from a molten state at a fast enough rate, preferably retain an amorphous state when solid. Metallic glasses can also be slightly or partially crystallised when solid after cooling. These materials can be up to twice as strong as steel, have greater wear and corrosion resistance and have higher elasticity values than steel.

Metallic glasses suitable for the purpose herein described can be, for example, any one of the following group of general alloy systems: Au-Pb-Sb, Pd-Ni-P, La-Al-Ni, La-Al-Cu, La-Al-Ni-Cu, Mg-Cu-Y, Zr-Al-Ni-Cu, Zr-Ti-Cu-Ni-Al, Zr-Ti-Cu-Ni-Be, Zr-Ti-Nb-Cu-Ni-Be, Pd-Cu-Ni-P, Ni-Nb-Ta, Al-Co-Zr, Al-Ni-Ce-B, Al-Ni-Y-Co-B.

These alloy systems are particularly useful because they can be cooled at slower rates than other metallic glasses yet still retain their amorphous state. One specific alloy that could be used is one containing, by weight percent, Zr 56.2, Ti 13.8, Nb 5, Cu7, Ni 5.5, Be 12.5. They can be cooled such that thickness of the metallic glass is of the order of 0.01 to 10mm. This is important in this invention because the glass coating is on a substrate and the combined thermal mass means that extremely fast cooling rates are not always possible. In many situations the substrate itself can be used as an effective heat sink, either alone or in combination with other cooling means.

The substrate could comprise any suitable shape typical of conventional forming tools that might be used in any of the forming methods previously mentioned. Also there is no particular requirement that the shape of the surface onto which the metallic glass is deposited to be of a certain kind. The metallic glass layer need not be deposited on the whole of the forming tool, merely on that face which comes into contact with the work-piece to be formed or modified, herein referred to as the working surface. In other words, the working surface is that face of the forming tool through which load is applied to the work-piece. The working surface could be substantially planar or profiled, (in the sense that its shape face varies in at least two dimensions). Alternatively the shape of the working surface can be at least a segment of the surface of a cylinder. In the latter case the substrate itself can be at least partly cylindrical or it could be a complete cylinder.

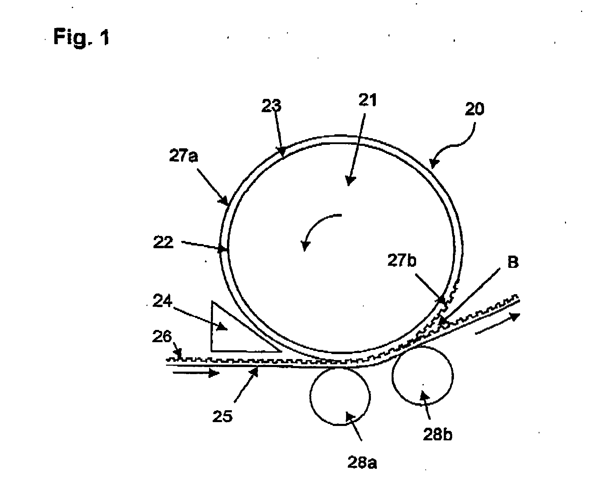

In Figure 1 a forming tool 20 not part of the present invention is in the form of a cylindrical work roll of a polymer processing unit (not shown). The forming tool 20 comprises a cylindrical substrate 21 and a metallic glass layer 23 on the working surface 22. In this embodiment the cylindrical forming tool is made to rotate and the outer surface 27a at least of the metallic glass layer 23 is heated up by a suitable heater 24 to a temperature above the glass transition temperature of the metallic glass. Above the glass transition temperature the metallic glass layer, or at least its outer surface, is soft enough to be modified. The outer surface of the metallic glass layer is then brought into contact with a template 25. In this example the template is a nickel shim which possesses, at least on one face a structured surface 26, either stochastic or deterministic in nature. The structured surface 26 of the template is brought into contact with the soft outer surface of the metallic glass and pressure is applied with the aid of two drive rolls 28a and 28b. After contact the outer surface of the metallic glass layer is modified and is converted into a structured outer surface 27b of the metallic glass layer. In order to preserve the newly structured outer surface of the metallic glass layer at least the structured outer surface of the metallic glass layer is cooled down at a rate sufficiently fast to retain an amorphous structure throughout the metallic glass layer. It is possible, as well, to cool down the metallic glass layer from the working surface side and the outer surface. This method can be a continuous system and it is within the bounds of the invention that the surface modification method herein described can be repeated a number of times. If this is the case in this embodiment, the structured outer surface 27b of the metallic glass layer can, on further rotation, be heated up as before and structured a second or third time by contact with the template. In this way, if the initial structured surface of the metallic glass layer is not deemed to be adequate for its Intended purpose it can be further Improved and refined.

In another embodiment the template can be fed round another series of rolls (not illustrated) back to the start in a continuous loop. In such a case the length of template can be carefully controlled to correspond to the diameter of the substrate cylindrical work roll, especially if the structure to be created is deterministic. The diameter of the cylindrical work roll is not critical. The forming tool and the template are separated in the region of point B. In some circumstances, for example when the glass transition temperature is high and there is a danger of the metallic glass and the template sticking together, a suitable release agent is applied to the structured surface of the template to make separation easier.

A typical heater would be an induction heater, heating by conduction or convection heater as an infrared heater but can also include for example contact heaters, flame heaters, Joule effect heaters or any other adequate heating device.

The structured surface of the metallic glass layer and the metallic glass layer itself can start to cool down even as the template and forming tool are in contact, i.e. before they are separated in this case. The cooling can be effected by the bulk of the substrate itself acting as a heat sink, which can be improved with the use of a cooling system built into the substrate. It is common for cylindrical work rolls to contain a chilled fluid such as a water system and this can be used to help provide the fast cooling required. Cooling can be further enhanced by forced gas, for example air cooling, applied on the exit side in the vicinity of the area marked B.

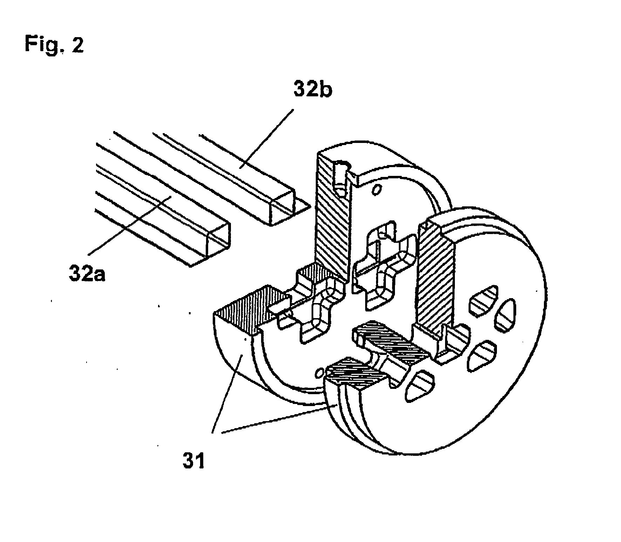

Figure 2 shows a die assembly 31 of an extrusion press to produce metal profiles 32a, 32b. The working surface of the die is coated with a metallic glass layer which is wear resistant and which make it easier to refurbish the worn die simply by rebuild the metallic glass layer.

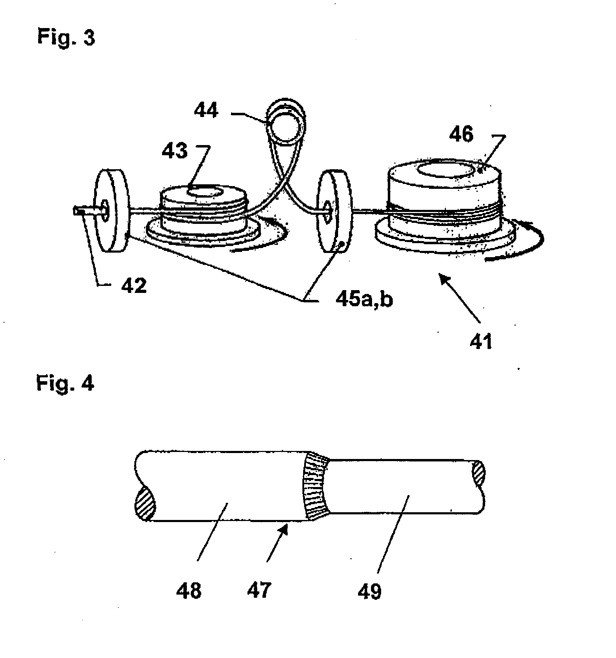

Figure 3 shows a wire draw machine containing a wire rod 42, first and second dies 45a,b, a draw block 43, a sheave and speed control device 44 and a finish draw block 46. The working surface of the dies 45a,b is coated with a metallic glass layer which is wear resistant and which make it easier to refurbish the worn die simply by rebuild the metallic glass layer.

Figure 4 shows an enlarged view of a wire reduction containing a wire 47 with a thicker part 48 and a thinner part 49 after passing through a die.

The tool and processes according to the invention offer a range of advantages. They allow a greater degree of reproducibility from one manufacturing plant to another. For example, two similar forming tools can be created in different locations because the same template can be used to produce almost identical tools. The template can be moved from one manufacturing plant to another and the working surface of the forming tool can be structured in exactly the same way at different locations. This will ensure consistency in the final form of the work-pieces being manufactured. Further, the very first structured forming tool can be used as a master tool and it can be used to generate a number of templates for use in other locations, again making production consistent from one manufacturing facility to another.

The tool and processes according to the invention facilitate longer forming tool life. The properties of the metallic glass layer are well suited to prolonging tool life. Their high elastic strain limits, combined with high strength and high toughness means that the metallic glass layer remains in the fully elastic range during forming operations, far away from the metallic glass yield strength. As a result the surface of the metallic glass layer retains its integrity for much longer than other forming tool protective layers.

Furthermore, by re-heating the metallic glass surface layer and refurbishing in exactly the same way as it had previously been formed, the life of the forming tool and its working surface can be further extended and any deterioration in the quality of the surface structure can be easily corrected.

## Claims

1. A forming tool (20) **characterised in that** it comprises a tool body (21) and at least a metallic glass layer (23) on at least the working surface (22) of the forming tool (20) whereas the forming tool is one of:
a) a forming tool for an extrusion press;
b) a die for a wire-drawing machine
and **in that** the metallic glass layer possesses a smooth surface.

2. A forming tool as claimed in claim 1, **characterised in that** there is at least one other functional layer between the working surface of the forming tool and the metallic glass layer.

3. A forming tool as claimed in claims 1 or 2 **characterised in that** the metallic glass layer has a lower limit of its thickness of 1 µm, preferably 10 µm, most preferably 500 µm and an upper limit of its thickness of 30 mm, preferably 10 mm, most preferably 5 mm.

4. A forming tool as claimed in claims 1 to 3 **characterised in that** the working surface of the substrate is substantially planar.

5. A forming tool as claimed in claims 1 to 4 **characterised in that** the composition of the metallic glass layer is an alloy from a group consisting of the following alloy systems: Au-Pb-Sb, Pd-Ni-P, La-Al-Ni, La-Al-Cu, La-Al-Ni-Cu, Mg-Cu-Y, Zr-Al-Ni-Cu, Zr-Ti-Cu-Ni-Al, Zr-Ti-Cu-Ni-Be, Zr-Ti-Nb-Cu-Ni-Be, Pd-Cu-Ni-P, Ni-Nb-Ta, Al-Co-Zr, Al-Ni-Ce-B, Al-Ni-Y-Co-B.

6. A forming tool as claimed in claims 1 to 5 **characterised in that** the forming tool of an extrusion press is one of an extrusion die, a die assembly or a mandrel.

7. A forming tool as claimed in claims 1 or 2 **characterised in that** the die of the extrusion press or the wire drawing machine is completely made of a metallic bulk glass.

## Patentansprüche

1. Formwerkzeug (20), **dadurch gekennzeichnet, dass** es einen Werkzeugkörper (21) und mindstens eine Schicht (23) aus metallischem Glas auf zumindest seiner wirksamen Oberfläche (22) aufweise, wobei das Formwerkzeug (20) entweder:
a) ein Formwerkzeug für eine Strangpresse oder
b) eine Ziehdüse für eine Drahtziehmaschine ist,
und dadurch, dass die Schicht aus metallischem Glas eine glatte Oberfläche aufweist.

2. Formwerkzeug nach Anspruch 1, **dadurch gekennzeichnet, dass** es mindestens eine weitere funktionsbeteiligte Schicht zwischen der wirksamen Oberfläche des Formwerkzeugs und der Schicht aus metallischem Glas gibt.

3. Formwerkzeug nach Anspruch 1 oder 2, **dadurch gekennzeichnet, dass** die Schicht aus metallischem Glas eine Untergrenze ihrer Dicke von 1 µm, vorzugsweise 10 µm, besonders bevorzugt 500 µm, und eine Obergrenze ihrer Dicke von 30 mm, vorzugsweise 10 mm, besonders bevorzugt 5 mm hat.

4. Formwerkzeug nach einem der Ansprüche 1 bis 3, **dadurch gekennzeichnet, dass** die wirksame Oberfläche des Substrats im Wesentlichen plan ist.

5. Formwerkzeug nach einem der Ansprüche 1 bis 4, **dadurch gekennzeichnet, dass** die Zusammensetzung der Schicht aus metallischem Glas eine Legierung ist, aus der gebildeten Gruppe gewählt, die aus den folgenden Legierungssystemen besteht: Au-Pb-Sb, Pd-Ni-P, La-Al-Ni, La-Al-Cu, La-Al-Ni-Cu, Mg-Cn-Y, Zr-Al-Ni-Cu, Zr-Ti-Cu-Ni-Al, Zr-Ti-Cu-Ni-Be, Zr-Ti-Nb-Cu-Ni-Be, Pd-Cu-Ni-P, Ni-Nb-Ta, Al-Co-Zr, Al-Ni-Ce-B, Al-Ni-Y-Co-B.

6. Formwerkzeug nach einem der Anspruche 1 bis 5, **dadurch gekennzeichnet, dass** es sich bei dem Formwerkzeug für eine Strangpresse um eine Pressmatrize, einen Düseneinsatz oder einen Dorn handelt.

7. Formwerkzeug nach Anspruch 1 oder 2, **dadurch gekennzeichnet, dass** die gesamte Düse der Strangpresse oder der Drahtzichmaschine aus einem massiven metallischen Glas hergestellt ist.

## Revendications

1. Outil de forme (20) **caractérise en ce qu'**il comprend un corps d'outil (21) et au moins une couche de verre métallique (23) sur au moins la surface de travail (22) de l'outil de forme (20), l'outil de forme pouvant être :
a) un outil de forme pour presse à filer,
b) une filière pour machine à tréfiler,
Et **en ce que** la couche de verre métallique possède une surface lisse.

2. Outil de forme selon la revendication 1, **caractérisé en ce qu'**il y a au moins une autre couche fonctionnelle entre la surface de travail de l'outil de forme et la couche de verre métallique.

3. Outil de forme selon les revendications 1 ou 2, **caractérise en ce que** la couche de verre métallique a une limite inférieure d'épaisseur égale à 1 µm, de préférence 10 µm et plus preferentiellement encore 500 µm, et une limite supérieure d'épaisseur égale à 30 mm, de préférence 10 mm et plus préférentiellement encore 5 mm.

4. Outil de forme selon l'une des revendications 1 à 3, **caractérisé en ce que** la surface de travail du substrat est sensiblement plane.

5. Outil de forme selon l'une des revendications 1 à 4, **caractérisé en ce que** la composition de la couche de verre métallique est un alliage choisi dans le groupe constitué des systèmes d'alliages suivants : Au-Pb-Sb, Pd-Ni-P, La-Al-Ni, La-Al-Cu, La-Al-Ni-Cu, Mg-Cu-Y, Zr-Al-Ni-Cu, Zr-Ti-Cu-Ni-Al, Zr-Ti-Ca-Ni-Bc, Zr-Ti-Nb-Cu-Ni-Be, Pd-Cu-Ni-P, Ni-Nb-Ta, Al-Co-Zr, Al-Ni-Ce-B, Al-Ni, Y-Co-B.

6. Outil de forme selon l'une des revendications 1 à 5, **caractérisé en ce que** l'outil de forme d'une presse à filer est une filière d'extrusion, un ensemble de filières ou une aiguille.

7. Outil de forme selon l'une des revendications 1 ou 2, **caractérisé en ce que** la filière pour presse à filer ou pour machine à tréfiler est réalisée entièrement en verre métallique massif.
